# EUROPÄISCHE PATENTANMELDUNG

(11) **EP 4 506 912 A1**
(43) Veröffentlichungstag der Anmeldung: **12.02.2025**
(21) Anmeldenummer: 23190049.9
(22) Anmeldetag: 07.08.2023
(51) Int. Cl.: G07C 9/30, G08B 21/02, F16P 3/14

(54) **SYSTEM ZUR KONTROLLE EINES ZUGANGS ZU EINEM SICHERHEITSBEREICH IN EINER BETRIEBSUMGEBUNG**

(71) Anmelder: Jungheinrich Aktiengesellschaft, 22047 Hamburg (DE)
(72) Erfinder: HOHMANN, Paul, 85356 Freising (DE); ENGERT, Christian, 97268 Kirchheim (DE)
(74) Vertreter: Weickmann & Weickmann PartmbB

(57) **Zusammenfassung**

Die vorliegende Erfindung betrifft ein System (10) zur Kontrolle eines Zugangs zu einem Sicherheitsbereich (B1) in einer Betriebsumgebung, insbesondere einer Logistikeinrichtung, umfassend einen Zugangsbereich (B3), welcher den Sicherheitsbereich (B1) von einem frei zugänglichen Bereich (B2) der Betriebsumgebung trennt, eine Überwachungseinrichtung (12), welche wenigstens zwei einander bezüglich des Zugangsbereichs gegenüberliegende Sensoreinheiten (12a) umfasst und dazu eingerichtet ist, in dem Zugangsbereich (B3) wenigstens zwei Überwachungsfelder (SF, WF1, WF2) aufzuspannen, wobei ein erstes der Überwachungsfelder (SF) den gesamten Zugangsbereich (B3) überdeckt und wenigstens ein zweites der Überwachungsfelder (WF1, WF2) einen Unterbereich des Zugangsbereichs (B3) überdeckt oder das wenigstens eine zweite Überwachungsfeld einen Unterbereich des Zugangsbereichs überdeckt und das erste Überwachungsfeld und das wenigstens eine zweite Überwachungsfeld gemeinschaftlich den gesamten Zugangsbereich überdecken; und eine Steuereinheit (14), welche mit der Überwachungseinrichtung (12) betriebsmäßig gekoppelt und ferner zu einer Kommunikation mit sich in der Betriebsumgebung fortbewegenden Fahrzeugen (F1) eingerichtet ist, wobei die Steuereinheit ferner dazu eingerichtet ist, bei einem Feststellen einer Verletzung des entsprechenden zweiten Überwachungsfelds nach einem Anfragen eines Durchfahrens des Zugangsbereichs durch ein Fahrzeug eine maximal zulässige Zeitspanne zu überwachen, innerhalb welcher ein sicheres Durchfahren des Zugangsbereichs möglich ist.

## Beschreibung

Die vorliegende Erfindung betrifft ein System zur Kontrolle eines Zugangs zu einem Sicherheitsbereich in einer Betriebsumgebung, eine Logistikeinrichtung, welche ein derartiges System umfasst, sowie ein Verfahren zum Betreiben eines derartigen Systems.

Es ist bekannt, in Betriebsumgebungen, wie beispielsweise Logistikeinrichtungen, von Fahrzeugen befahrbare Bereiche in unterschiedliche Sicherheitsniveaus einzuteilen, beispielsweise in frei zugängliche Bereiche, in welchen ein Mischverkehr erlaubt ist und sich demzufolge also auch Personen aufhalten dürfen, und einen Automatikbereich, in welchem lediglich automatisierte Fahrzeuge und Vorrichtungen betrieben werden dürfen. Hierbei werden in dem frei zugänglichen Bereich auch automatisierte oder autonome Fahrzeuge betrieben, die jedoch mit Sensoren und einer entsprechenden Datenverarbeitungseinheit ausgestattet sein müssen, um auch bei Begegnung mit Personen und manuell geführten Fahrzeugen sicher betrieben zu werden. Diese sicheren automatischen oder automatisierten Fahrzeuge und zusätzlich nicht sichere automatisierte Fahrzeuge dürfen in dem Automatikbereich betrieben werden, zu dem allerdings manuell geführten Fahrzeugen und Personen im Betrieb der Zugang untersagt ist. Hierbei verfügen die nicht sicheren automatischen Fahrzeuge nicht über eine entsprechende Sensorik und Datenverarbeitung, um auch bei Begegnung mit manuell geführten Fahrzeugen und insbesondere Personen sicher betrieben zu werden.

Wenn sich nun ein menschlicher Bediener, beispielsweise zum Durchführen einer Wartung oder ähnlichem, in einen solchen Automatikbereich hineinbewegen möchte, so ist beispielsweise durch eine entsprechende Sicherheitstür sicherzustellen, dass entsprechende in diesem Automatikbereich befindliche Fahrzeuge und Vorrichtungen während der Zeit des Aufenthalts der Person stillstehen, um Unfälle zu vermeiden. Hierbei wird in der Regel bei Durchqueren der Sicherheitstür der Betrieb der nicht sicheren automatisierten Fahrzeuge in dem Bereich durch Betätigung oder Auslösen entsprechender Sensoren, beispielsweise Sicherheitsschaltern oder ähnlichem, unterbrochen. Dies liegt daran, dass in dem Automatikbereich selbst in einem normalen Betrieb aufgrund der angenommenen Abwesenheit von menschlichen Personen an sich niedrigere Sicherheitsstandards hinsichtlich des Betriebs von Fahrzeugen und Vorrichtungen eingehalten werden können, da aufgrund der Betriebsweise des Automatikbereichs Wechselwirkungen und Unfälle mit menschlichen Personen von vornherein ausgeschlossen sein sollen.

Andererseits besteht jedoch in bestimmten Betriebsabläufen auch die Notwendigkeit, einem Fahrzeug einen Zugang zu einem solchen Sicherheitsbereich, wie beispielsweise dem angesprochenen Automatikbereich einer Logistikeinrichtung, zu ermöglichen, insbesondere um Waren in diesen Sicherheitsbereich hinein zu transportieren. Zu diesem Zweck ist es notwendig, ein System zur Kontrolle des Zugangs zu dem Sicherheitsbereich bereitzustellen, welches es einerseits in einem normalen und vorgesehenen Betrieb entsprechenden Fahrzeugen ermöglicht, aus einem frei zugänglichen Bereich der Betriebsumgebung, wie beispielsweise dem angesprochenen Bereich mit Mischverkehr, in den Sicherheitsbereich einzufahren, während es andererseits menschlichen Personen oder nicht autorisierten Fahrzeugen durch das System nicht gestattet wird, in den Sicherheitsbereich einzutreten oder einzufahren. Hierbei ist es gleichzeitig wünschenswert, ein möglichst einfaches Passieren eines solchen Systems für autorisierte Fahrzeuge zu ermöglichen, da beispielsweise beim Einsatz von Schleusen mit mehreren Türen oder ähnlichem eine Verzögerung oder gar ein Anhalten der entsprechenden Fahrzeuge notwendig wird, was vor dem Hintergrund eines möglichst effizienten Betriebs davon als nachteilhaft zu bewerten ist. Bei den autorisierten Fahrzeugen handelt es sich hierbei in der Regel um sichere automatische oder automatisierte Fahrzeuge.

Dementsprechend ist es die Aufgabe der vorliegenden Erfindung, ein System zur Kontrolle eines Zugangs zu einem Sicherheitsbereich in einer Betriebsumgebung bereitzustellen, welches einerseits einen effizienten Zugang des Sicherheitsbereichs für zulässige bzw. autorisierte Fahrzeuge erlaubt, jedoch einen Zugang durch menschliche Bediener oder nicht-autorisierte Fahrzeuge zuverlässig verhindert, beziehungsweise in einem solchen Fall einen unzulässigen Betriebszustand erkennt, auf dessen Grundlage dann entsprechende Maßnahmen getroffen werden können.

Zu diesem Zweck umfasst das erfindungsgemäße System einen Zugangsbereich, welcher den Sicherheitsbereich von einem frei zugänglichen Bereich der Betriebsumgebung trennt, eine Überwachungseinrichtung, welche wenigstens zwei einander bezüglich des Zugangsbereichs gegenüberliegende Sensoreinheiten umfasst und dazu eingerichtet ist, in dem Zugangsbereich wenigstens zwei Überwachungsfelder aufzuspannen, wobei ein erstes der Überwachungsfelder den gesamten Zugangsbereich überdeckt und wenigstens ein zweites der Überwachungsfelder einen Unterbereich des Zugangsbereichs überdeckt, oder das wenigstens eine zweite Überwachungsfeld einen Unterbereich des Zugangsbereichs überdeckt und das erste Überwachungsfeld und das wenigstens eine zweite Überwachungsfeld gemeinschaftlich den gesamten Zugangsbereich überdecken, und eine Steuereinheit, welche mit der Überwachungseinrichtung betriebsmäßig gekoppelt und ferner zu einer Kommunikation mit sich in der Betriebsumgebung fortbewegenden Fahrzeugen eingerichtet ist, wobei die Steuereinheit ferner dazu eingerichtet ist, bei einem Feststellen einer Verletzung des entsprechenden zweiten Überwachungsfelds nach einem Anfragen eines Durchfahrens des Zugangsbereichs durch ein Fahrzeug eine maximal zulässige Zeitspanne zu überwachen, innerhalb welcher ein sicheres Durchfahren des Zugangsbereichs möglich ist, wobei die Steuereinheit ferner zusätzlich dazu eingerichtet sein kann, eine minimal zulässige Zeitspanne zu überwachen, welche nach einem Anfragen eines Durchfahrens des Zugangsbereichs durch ein Fahrzeug für ein sicheres Durchfahren des Zugangsbereichs nicht unterschritten werden darf.

Hierbei sei darauf hingewiesen, dass der Zugangsbereich insbesondere durch einen einfachen Durchgang zwischen dem frei zugänglichen Bereich und dem Sicherheitsbereich gebildet sein kann, beispielsweise eine Ausnehmung in einem Zaun oder einer Wand, sodass ein solcher Zugangsbereich letztlich auch durch eine im Wesentlichen zweidimensionale Fläche in Höhen- und Breitenrichtung ausgeführt sein kann. Alternativ sind jedoch auch Zugangsbereiche mit einer gewissen Tiefe denkbar, wobei in solchen Fällen die vollständige Überdeckung des Zugangsbereichs durch das erste Überwachungsfeld derart zu verstehen ist, dass wenigstens in einer Ebene innerhalb eines solchen Zugangsbereichs das entsprechende erste Überwachungsfeld den Bereich zwischen entsprechenden begrenzenden Wänden, Zäunen oder ähnlichem zumindest bis zu einer festgelegten Höhe in Gänze oder komplett ausfüllt.

In diesem Zusammenhang sei ferner darauf hingewiesen, dass die Überwachungsfelder und insbesondere das erste Überwachungsfeld auch derart durch mehrere Sensoreinheiten aufgespannt sein kann, dass zwei zusammenhängende oder überlappende entsprechende Überwachungsfelder erzeugt werden, welche den gesamten Bereich in der eben beschriebenen Weise überdecken. Hierzu kann insbesondere eine entsprechende erste Sensoreinheit an einer Seite und eine entsprechende zweite Sensoreinheit an der gegenüberliegenden Seite des als Durchfahrt ausgebildeten Zugangsbereichs angeordnet sein. Ferner soll darauf hingewiesen sein, dass auch Ausgestaltungen in der vorliegenden Erfindung umfasst sind, in welchen das erste Überwachungsfeld an denjenigen Stellungen Ausnehmungen aufweist, an welchen jeweils ein zweites Überwachungsfeld vorliegt. In derartigen Varianten wird die vollständige Überdeckung des Zugangsbereichs dann durch ein Zusammenwirken der entsprechenden ersten und zweiten Überwachungsfelder erreicht.

Ferner sei darauf hingewiesen, dass durch das Vorsehen des ersten und des wenigstens einen zweiten Überwachungsfelds einerseits der gesamte Zugangsbereich mittels des ersten Überwachungsfelds dauerhaft überwacht werden kann, während ferner durch das wenigstens eine zweite Überwachungsfeld ein definierter Unterbereich des Zugangsbereichs geschaffen wird, durch welchen ein entsprechendes in der Betriebsumgebung fahrendes Fahrzeug hindurchtreten kann, um in den Sicherheitsbereich einzutreten. Durch diese räumliche Begrenzung des wenigstens einen zweiten Überwachungsfelds kann verhindert werden, dass eine Person während eines an sich zulässigen Durchfahrens des Zugangsbereichs durch ein autorisiertes Fahrzeug neben diesem in den Sicherheitsbereich eintritt. Dementsprechend ist es wünschenswert, das wenigstens eine Überwachungsfeld möglichst genau auf die Abmessungen des entsprechenden Fahrzeugs anzupassen, wie weiter unten noch diskutiert werden wird.

Um zunächst einmal eine Autorisierung eines Fahrzeugs nach einer Anfrage ausführen zu können, umfasst das System ferner die angesprochene Steuereinheit, welche durch die betriebsmäßige Kommunikation mit dem entsprechenden Fahrzeug die Überwachungseinrichtung in einen derartigen Zustand versetzen kann, dass durch den wenigstens einen zweiten Überwachungsbereich hindurch während eines vordefinierten Zeitfensters nach einer Anfrage zu einem Durchfahren durch das entsprechende Fahrzeug ein Zugang zu dem Sicherheitsbereich für das Fahrzeug erlaubt wird, wie im Folgenden ebenfalls noch weiter ausgeführt werden wird.

Wenngleich die Sensoreinheiten der Überwachungseinrichtung durch beliebige geeignete Typen von Sensoreinheiten gebildet sein können, welche in der Lage sind, erste und zweite Überwachungsfelder in der oben beschriebenen Art aufzuspannen, so eignen sich für diesen Zweck jedoch insbesondere 2D-LIDAR-Sensoreinheiten, welche einerseits hinsichtlich ihres Betriebs und ihrer Funktionsweise äußerst zuverlässig sind und andererseits problemlos am Markt erhältlich und in entsprechende Anordnungen integrierbar sind.

Ferner kann es in gewissen Ausführungsformen von erfindungsgemäßen Systemen wünschenswert sein, dass die Überwachungseinrichtung ferner eine dritte Sensoreinheit umfasst, welche in einem zentralen oberen Bereich des Zugangsbereichs angeordnet ist. Auf diese Weise wird eine Ausgestaltung mit einer Mehrzahl von zweiten Überwachungsfeldern vereinfacht, da durch die dritte Sensoreinheit eine Abschattung bestimmter Unterbereiche des Zugangsbereichs verhindert wird, wenn momentan ein Fahrzeug durch eines der zweiten Überwachungsfelder hindurchfährt.

Dementsprechend kann die Überwachungseinrichtung dazu eingerichtet sein, wenigstens zwei zweite Überwachungsfelder in jeweiligen Unterbereichen des Zugangsbereichs aufzuspannen, wodurch beispielsweise Konfigurationen ermöglicht werden, in welchen durch ein erstes der wenigstens zwei zweiten Überwachungsfelder eine Einfahrt eines ersten Fahrzeugs in den Sicherheitsbereich ermöglicht wird, während durch ein zweites der zweiten Überwachungsfelder ein gleichzeitiges Herausfahren eines zweiten Fahrzeugs aus dem Sicherheitsbereich in den frei zugänglichen Bereich der Betriebsumgebung ermöglicht wird. Auf diese Weise kann nach einem Gegenverkehr-Verfahren gearbeitet werden und Fahrzeuge können beispielsweise durch eines der zweiten Überwachungsfelder in den Sicherheitsbereich hineinfahren, dort eine Last in einem Übergabebereich absetzen und anschließend den Sicherheitsbereich durch ein anderes zweites Überwachungsfeld wieder verlassen, wobei die Abläufe hinsichtlich der Anfrage nach einem Durchfahren und der Behandlung der Überwachungsfelder bei einem Einfahren in den Sicherheitsbereich hinein und aus dem Sicherheitsbereich heraus identisch sein können. Auf diese Weise werden Wartezeiten der Fahrzeuge verhindert oder wenigstens verringert und die Gesamteffizienz einer entsprechenden Logistikeinrichtung kann gesteigert werden, ohne dass hierbei Kompromisse hinsichtlich ihrer Sicherheit eingegangen werden müssten.

Weiterhin ist es in dem System gemäß der vorliegenden Erfindung denkbar, dass das erste Überwachungsfeld und das zweite Überwachungsfeld unterschiedliche Sicherheitsstufen aufweisen, wobei insbesondere das erste Überwachungsfeld als ein Sicherheitsfeld bzw. Schutzfeld ausgeführt sein kann und/oder das wenigstens zweite Überwachungsfeld als ein Warnfeld ausgeführt sein kann. Hierbei unterscheiden sich Sicherheitsfelder und Warnfelder in an sich bekannter Art und Weise dadurch, dass bei Sicherheitsfeldern hinsichtlich der sie erzeugenden Hardware höhere Anforderungen bezüglich ihrer Zuverlässigkeit und ähnlichem gestellt werden, beispielsweise dass Sicherheitsfelder eine höhere Redundanz hinsichtlich ihrer Datenverarbeitung oder ihres Datentransports aufzuweisen haben. Es ist jedoch in dem System gemäß der vorliegenden Erfindung ausdrücklich denkbar, sowohl ein solches Sicherheitsfeld als auch wenigstens ein Warnfeld durch eine einzelne Überwachungseinrichtung erzeugen zu lassen, welche dementsprechend beispielsweise mehrere separate Datenausgänge für Sicherheits- und Warnfelder mit unterschiedlicher Konfiguration aufweisen kann. Jedoch sind alternativ selbstverständlich auch Varianten des erfindungsgemäßen Systems denkbar, in welchen sämtliche der genannten Überwachungsfelder als Schutzfelder ausgeführt sind.

Des Weiteren kann die Steuereinheit des erfindungsgemäßen Systems ferner dazu eingerichtet sein, bei einem Bestimmen eines unsicheren Passierens des Zugangsbereichs ein Auslösen wenigstens einer vorbestimmten Sicherheitsmaßnahme anzuweisen, insbesondere eines Stilllegens von in dem Sicherheitsbereich befindlichen Fahrzeugen und/oder Vorrichtungen. Zu diesem Zweck kann die Steuereinheit in geeigneter Weise zu einer Kommunikation mit einem übergeordneten Verwaltungssystem für diese Fahrzeuge und/oder Vorrichtungen eingerichtet oder anderweitig mit ihr integriert sein.

Weiterhin betrifft die vorliegende Erfindung eine Logistikeinrichtung, umfassend einen Sicherheitsbereich und einen frei zugänglichen Bereich, wobei zwischen dem frei zugänglichen Bereich und dem Sicherheitsbereich ein System nach einem der vorhergehenden Ansprüche vorgesehen ist. Wie bereits weiter oben angesprochen, kann es sich hierbei bei dem frei zugänglichen Bereich um einen Bereich der Betriebsumgebung mit Mischverkehr handeln, während der Sicherheitsbereich durch einen Bereich mit Automatikbetrieb gebildet sein kann.

Gemäß einem weiteren Aspekt betrifft die vorliegende Erfindung ein Verfahren zum Betreiben eines Systems der eben beschriebenen Art, welches unter dauerhafter Überwachung wenigstens des ersten Überwachungsfelds und ggf. des wenigstens einen zweiten Überwachungsfelds durch die Überwachungseinrichtung die Schritte umfasst eines Anfragens eines Durchfahrens des Zugangsbereichs an die Steuereinheit durch ein sich in der Betriebsumgebung bewegendes Fahrzeug, bei Feststellen einer Verletzung des oder eines der zweiten Überwachungsfelder und ggf. des ersten Überwachungsfelds, eines Startens einer Zeitnahme durch die Steuereinheit, lediglich bei Feststellen einer Verletzung des entsprechenden zweiten Überwachungsfelds für eine Zeitspanne, welche unterhalb einer vorbestimmten maximal zulässigen Zeitspanne liegt, eines Bestimmens eines sicheren Durchfahrens des Zugangsbereichs, und bei allen anderen festgestellten Verletzungen des ersten und ggf. zweiten Überwachungsfelds, eines Bestimmens eines unsicheren Passierens des Zugangsbereichs, wobei vorzugsweise lediglich bei einer Verletzung des entsprechenden zweiten Überwachungsfelds für eine Zeitspanne, welche zwischen einer vorbestimmten minimal zulässigen Zeitspanne und der genannten maximal zulässigen Zeitspanne liegt, ein sicheres Durchfahren des Zugangsbereichs bestimmt wird.

In diesem Zusammenhang versteht sich, dass das oben beschriebene erfindungsgemäße System mit seinen entsprechenden Komponenten zum Durchführen eines derartigen Verfahrens eingerichtet ist und insbesondere die Überwachungseinrichtung und die Steuereinheit mittels geeigneter Softwaremittel dazu programmiert sind, die entsprechenden Verfahrensschritte durchzuführen, was in gleicher Weise auch für die im Folgenden noch beschriebenen Weiterbildungen des erfindungsgemäßen Verfahrens gilt.

In jedem Fall beruht das erfindungsgemäße Verfahren darauf, dass ein Fahrzeug, welches den Zugangsbereich passieren möchte, sich zunächst einmal bei der Steuereinheit des erfindungsgemäßen Systems durch kommunikatives Übertragen einer entsprechenden Anfrage anmeldet und die Steuereinheit demzufolge darüber informiert wird, dass mit einer Verletzung eines der zweiten Überwachungsfelder und ggf. des ersten Überwachungsfelds zu rechnen ist, sofern dieses den gesamten Zugangsbereich überdeckt und keine Ausnehmungen an der Position des wenigstens einen zweiten Überwachungsfelds aufweist. Hierbei kann beispielsweise unmittelbar nach Eingang dieser Anfrage die Steuereinheit die Durchfahrt gestatten oder es könnte andererseits auch noch eine Überprüfung der Anfrage anhand vorbestimmter Kriterien durchgeführt werden. An dieser Stelle sei darauf hingewiesen, dass die entsprechende Kommunikation entweder direkt von dem Fahrzeug zu der Steuereinheit des Systems erfolgen kann oder beispielsweise auch indirekt über ein übergeordnetes Verwaltungssystem, welches sowohl mit dem Fahrzeug als auch dem System in kommunikativer Verbindung steht.

In jedem Fall definiert das entsprechende zweite Überwachungsfeld den konkreten Bereich, durch welchen hindurch das Passieren des Zugangsbereichs für das entsprechende Fahrzeug erlaubt sein soll, wobei eine entsprechende erlaubte Route dem Fahrzeug vorgegeben oder im laufenden Betrieb mitgeteilt werden kann. Es ist hierbei denkbar, dass das wenigstens eine zweite Überwachungsfeld erst nach Erhalt einer entsprechenden Anfrage überhaupt aktiviert wird, da in einem Zustand, in welchem keine Anfrage vorliegt, zunächst auch noch keine Verwendung für ein zweites Überwachungsfeld besteht.

Sobald die Steuereinheit nun eine entsprechende Verletzung der Überwachungsfelder feststellt, beginnt sie eine Zeitnahme, wobei durch diese Zeitnahme einerseits eine minimale und andererseits eine maximale Zeitdauer festgelegt werden, welche während des Durchfahrens des Zugangsbereichs bzw. des Verletzens der Überwachungsfelder nicht unter- bzw. überschritten werden dürfen. Dieses Vorgehen beruht darauf, dass bei entsprechenden Fahrzeugen stets davon ausgegangen werden kann, dass diese eine bestimmte Zeit zur Durchfahrt des Sicherheitsbereichs benötigen, während welcher sie sich innerhalb des Zugangsbereichs aufhalten bzw. die entsprechenden Überwachungsfelder verletzen, während andererseits nach einer entsprechenden maximalen Zeit davon ausgegangen werden kann, dass der Passiervorgang abgeschlossen sein müsste, sofern nicht ein unvorhergesehenes Ereignis aufgetreten ist. Dementsprechend erfordert ein zulässiger Zugang durch den Zugangsbereich bzw. ein Passieren davon ein Anmelden bzw. Anfragen eines bevorstehenden Durchfahrens des Zugangsbereichs durch ein entsprechendes Fahrzeug und ein Durchfahren der entsprechenden Überwachungsfelder in einer Zeit, welche innerhalb eines durch die minimal zulässige Zeitspanne und die maximal zulässige Zeitspanne vorgegebenen zulässigen Zeitfensters liegt.

Auf diese Weise werden zahlreiche unzulässige Zugänge durch den Zugangsbereich ausgeschlossen, welche Signaturen aufweisen, welche typisch für menschliche Personen sind. Beispielsweise würde eine Verletzung des ersten Überwachungsfelds ohne eine vorhergehende Anmeldung eines Fahrzeugs in jedem Fall zum Feststellen eines unsicheren Passierens des Zugangsbereichs führen, ebenso wie ein zu schnelles oder zu langsames Durchtreten des Zugangsbereichs oder ein Verletzen des ersten Überwachungsfelds außerhalb eines momentan zulässigen zweiten Überwachungsfelds.

Als weiteres Sicherheitsmerkmal kann das erfindungsgemäße Verfahren ferner ein Zurücksetzen des Betriebs des erfindungsgemäßen Systems umfassen, sobald nach einem angefragten Durchfahren der Überwachungsfelder ein Ende des Verletzens davon erfasst worden ist. Ein derartiger Verfahrensschritt entspricht einem Löschen bzw. Invalidieren der Anfrage nach einem Durchfahren des Zugangsbereichs durch ein Fahrzeug, nachdem eine entsprechende Verletzung der Überwachungsbereiche festgestellt worden ist und diese anschließend wieder beendet wurde. Durch diesen zusätzlichen Verfahrensschritt kann insbesondere sichergestellt werden, dass nicht beispielsweise eine Person unmittelbar hinter einem Fahrzeug in den Sicherheitsbereich eintritt, für den Fall, dass das zulässige Zeitfenster für eine Verletzung des entsprechenden zweiten Überwachungsbereichs noch geöffnet gewesen wäre oder eine Person vor einem Fahrzeug im korrekten Tempo durch den zweiten Überwachungsbereich in den Sicherheitsbereich eintritt. In diesem Fall würde dann das Passieren des angemeldeten Fahrzeugs im Anschluss an die Person den Zustand des unsicheren Passierens auslösen.

Ferner kann das erfindungsgemäße Verfahren nach dem Anfragen eines Durchfahrens des Zugangsbereichs durch ein Fahrzeug ein Auslösen einer Vorlauf-Zeitnahme durch die Steuereinheit umfassen, wobei bei einem Ablauf einer vorbestimmten maximalen zulässigen Vorlaufzeit vor einer erstmaligen Verletzung des ersten Überwachungsfelds ein unsicheres Passieren des Zugangsbereichs bestimmt wird. Auf diese Weise können Szenarien abgefangen werden, in welchen die Zeitspanne zwischen dem Anfragen eines Durchfahrens des Zugangsbereichs und dem tatsächlichen Beginn eines derartigen Durchfahrens länger als angenommen oder gewünscht ist, was auf einen Fehler oder eine Manipulation hindeuten könnte. Hierbei kann die entsprechende Vorlaufzeit von jeweiligen Attributen des Fahrzeugs abhängig gemacht werden, beispielsweise dem Abstand davon zu dem Zugangsbereich während des Anfragevorgangs, seiner Geschwindigkeit und ähnlichem. Entsprechende Daten des Fahrzeugs, welche die genannten Attribute repräsentieren, können von dem Fahrzeug zusammen mit der Anfrage nach dem Durchfahren des Zugangsbereichs an die Steuereinheit gesendet werden.

In ähnlicher Weise kann das erfindungsgemäße Verfahren ein Anpassen mindestens des zweiten Überwachungsfelds auf Grundlage von für das Fahrzeug zusammen mit der Anfrage nach einem Durchfahren des Zugangsbereichs gelieferten Fahrzeugdaten umfassen, insbesondere der Dimensionen des Fahrzeugs und/oder der Last und/oder ein Anpassen der vorbestimmten minimal zulässigen Zeitspanne und/oder der vorbestimmten maximal zulässigen Zeitspanne auf Grundlage von durch das Fahrzeug zusammen mit der Anfrage nach einem Durchfahren des Zugangsbereichs gelieferten Fahrzeugdaten umfassen. Die entsprechenden Fahrzeugdaten können alternativ auch in einem Leitsystem hinterlegt sein, so dass die Steuereinheit des Systems die entsprechenden Daten im Zusammenhang mit der Anfrage nach einem Durchfahren von diesem erhalten kann.

Hierbei kann beispielsweise an Abmessungen des Fahrzeugs bzw. der von ihm getragenen Last, die Geschwindigkeit des Fahrzeugs und ähnliches gedacht werden, wobei entsprechende Daten von dem Fahrzeug sowohl direkt in einer entsprechenden Weise kodiert an die Steuereinheit übertragen werden können oder das Fahrzeug andererseits auch Kennungen seines Fahrzeugtyps und von denkbaren Lasttypen an die Steuereinheit übertragen kann, welche diese mittels einer in einem zugeordneten Speicher hinterlegten Nachschlagetabelle in entsprechende Parameter des Fahrzeugs und/oder der von ihm getragenen Last übersetzen kann. Auf diese Weise können weitere unzulässige Durchgänge durch den Zugangsbereich abgefangen werden, beispielsweise der Versuch einer Person, unmittelbar neben einem autorisierten in den Sicherheitsbereich einzutreten, da die Abmessungen und/oder die Position des entsprechenden zweiten Überwachungsfelds an die geometrischen Vorgaben des Fahrzeugs mit geringen Toleranzen bzw. Überständen angepasst werden können, wodurch kein ausreichender Platz für eine zusätzliche Person dem entsprechenden zweiten Überwachungsfeld neben dem Fahrzeug verbliebe.

Hierbei sei jedoch darauf hingewiesen, dass eine derartige Weiterbildung des erfindungsgemäßen Systems lediglich in Betriebsumgebungen sinnvoll erscheint, in welchen unterschiedliche Fahrzeugtypen und Lasttypen zum Einsatz kommen, sollte dem hingegen in der entsprechenden Betriebsumgebung lediglich ein einzelner Fahrzeugtyp und ein einzelner Lasttyp eingesetzt werden, so könnte auch mit einem einzelnen festgelegten Überwachungsfeld und einzelnen Werten für die maximal und minimal zulässigen Zeitspannen gearbeitet werden, ohne dass hierdurch die Sicherheit des Systems verschlechtert würde, sofern die entsprechenden Parameter ausreichend gut auf die Eigenschaften des entsprechenden Fahrzeugtyps angepasst sind. In einem solchen Fall sollten dann ferner die Geschwindigkeit und die Position der Durchfahrt durch den Zugangsbereich des entsprechenden einzigen Fahrzeugtyps fest vorgegeben sein und die Abmessungen des Fahrzeugs sollten sich durch eine aufgenommene Last nicht signifikant ändern.

In diesem Zusammenhang sei insbesondere erneut darauf hingewiesen, dass das Anpassen des zweiten Überwachungsfelds dessen geometrische Form oder Abmessungen betreffen kann, jedoch ist andererseits auch bei einer veränderlichen Geschwindigkeit der Fahrzeuge oder abhängig von ihrer Zuladung, beispielsweise ob eine Last getragen wird oder nicht, eine Anpassung der Vorlaufzeit sowie der minimal und maximal zulässigen Zeitspannen denkbar. Zudem könnte bei einer veränderlichen Position der Durchfahrt die Position des entsprechenden zweiten Überwachungsfelds angepasst werden.

Zuletzt sei darauf hingewiesen, dass das erfindungsgemäße Verfahren bei einem Bestimmen eines unsicheren Durchfahrens des Zugangsbereichs ein Auslösen wenigstens einer vorbestimmten Sicherheitsmaßnahme umfassen kann, insbesondere ein Stilllegen von in dem Sicherheitsbereich befindlichen Fahrzeugen oder Vorrichtungen. Gerade in dem oben schon öfter diskutierten Beispiel einer Ausgestaltung des Sicherheitsbereichs als Automatikbereich können beispielsweise sämtliche in diesem Automatikbereich befindlichen Fahrzeuge und/oder Vorrichtungen als Ganzes stillgelegt werden. Hierbei kann es sich insbesondere um automatisierte Schmalgangfahrzeuge, Regalbediengeräte oder Roboter handeln.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: eine isometrische Ansicht eines erfindungsgemäßen Systems zur Kontrolle eines Zugangs zu einem Sicherheitsbereich einer Betriebsumgebung;
- Figuren 2a bis 2d: schematische Darstellungen des Systems aus Figur 1 während eines Durchfahrens davon durch zwei Fahrzeuge jeweils in Draufsicht und in projizierter Vorderansicht zur Verdeutlichung der entsprechenden Überwachungsfelder; und
- Figur 3: ein Flussdiagramm zur Verdeutlichung der Vorgänge aus den Figuren 2a bis 2d.

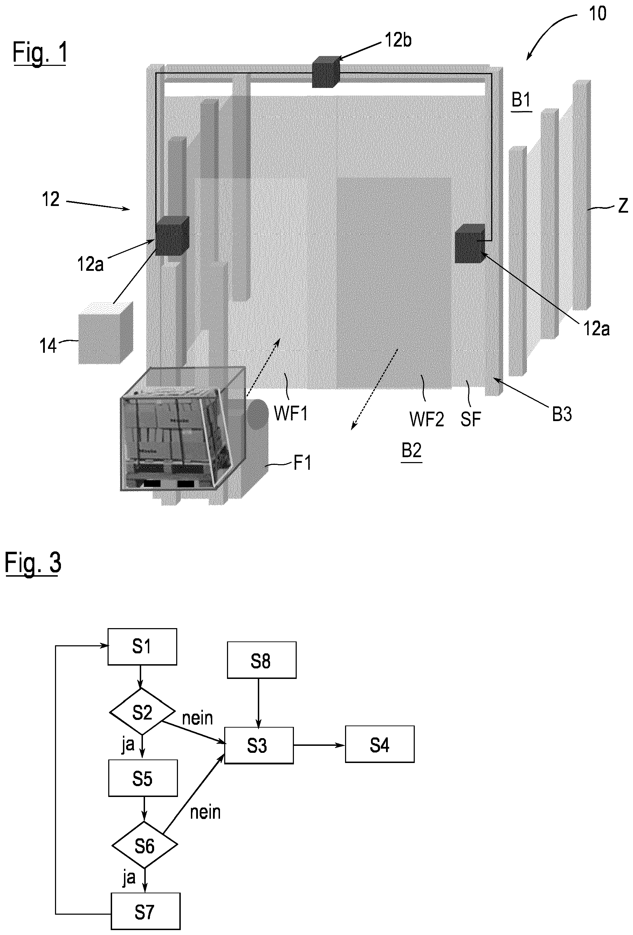

In Figur 1 ist nun zunächst ein erfindungsgemäßes System zur Kontrolle eines Zugangs zu einem Sicherheitsbereich in einer Betriebsumgebung, beispielsweise einer Logistikeinrichtung, in einer schematischen isometrischen Ansicht dargestellt und ganz allgemein mit dem Bezugszeichen 10 bezeichnet. Weiterhin ist der durch einen Zaun Z begrenzte Sicherheitsbereich mit B1 und ein frei zugänglicher Bereich mit B2 bezeichnet, wobei zwischen diesen beiden Bereichen ferner ein Zugangsbereich B3 vorgesehen ist, in welchem das erfindungsgemäße System 10 befindlich ist bzw. welcher durch das System 10 definiert wird. Hierbei erzeugt das System 10 gewissermaßen einen virtuellen Vorhang, welcher die den Zugangsbereich B3 bildende Öffnung in dem Zaun Z bedeckt.

In diesem Zugangsbereich B3 ist nämlich eine Überwachungseinrichtung 12 mit zwei als 2D-LIDAR-Sensoren ausgebildeten Sensoreinheiten 12a vorsehen, welche einander beiderseits des Zugangsbereichs B3 gegenüberliegen. Ferner umfasst die Überwachungseinrichtung 12 neben hier nicht weiter dargestellten Datenverarbeitungsmitteln zusätzlich eine dritte Sensoreinheit 12b, welche mittig oberhalb des Zugangsbereichs B3 positioniert ist. Die Überwachungseinrichtung 12 spannt nun in der in Figur 1 angedeuteten Weise mittels der Sensoreinheiten 12a und 12b über den gesamten Zugangsbereich B3 ein erstes Überwachungsfeld SF und über Unter- oder Teilbereiche des Zugangsbereichs B3 zwei zweite Überwachungsfelder WF1 und WF2 auf, wie weiter unten noch detailliert erläutert werden wird.

Bezüglich der Anordnung der Sensoreinheiten 12a und 12b sei darauf hingewiesen, dass für die Durchfahrt eines Fahrzeugs zumindest zwei Sensoren 12a notwendig sind, um den sich während der Durchfahrt jeweils hinter dem Sensor befindlichen Bereich überwachen zu können, der in diesem Moment jeweils durch das Fahrzeug abgeschattet wird. Soll eine gleichzeitige Durchfahrt von zwei Fahrzeugen ermöglicht werden, so ist zusätzlich die sich oberhalb oder auch unterhalb befindliche Sensoreinheit 12b notwendig, um den Bereich zwischen den Fahrzeugen erfassen zu können. Allgemein lässt sich festhalten, dass für eine gleichzeitige Durchfahrt von n Fahrzeugen jeweils n+1 Sensoreinheiten notwendig sind.

Weiterhin umfasst das erfindungsgemäße System 10 eine hier lediglich schematisch dargestellte Steuereinheit 14, welche einerseits mit der Überwachungseinrichtung 12 betriebsmäßig gekoppelt ist und ferner zu einer Kommunikation mit sich in der Betriebsumgebung fortbewegenden Fahrzeugen eingerichtet ist, wobei in Figur 1 zunächst lediglich ein einzelnes entsprechendes Fahrzeug F1 dargestellt ist. Ferner ist in Figur 1 durch entsprechende gestrichelte Pfeile der vorgesehene Betriebsmodus des erfindungsgemäßen Systems 10 angedeutet, wobei auf einer ersten Spur durch das linke zweite Überwachungsfeld WF1 eine Einfahrt des Fahrzeugs F1 in den Sicherheitsbereich B1 ermöglicht werden soll, während auf einer zweiten Spur dieses Fahrzeug F1 durch das rechte zweite Überwachungsfeld WF2 zu einem späteren Zeitpunkt wieder aus dem Sicherheitsbereich B1 austreten und zurück in den frei zugänglichen Bereich B2 fahren kann. Grundsätzlich ist allerdings die Fahrtrichtung durch den Zugangsbereich B3 nicht wesentlich, da bei der Erfassung der Ein- und Ausfahrt lediglich auf die Unterbrechung der entsprechenden Überwachungsfelder abgestellt wird. Die Fahrtrichtung kann jedoch durch ein Leitsystem, beispielsweise ein Routenplanungssystem, vorgegeben werden, um Begegnungen von Fahrzeugen zu verhindern und den reibungslosen Betrieb der Anlage sicherzustellen.

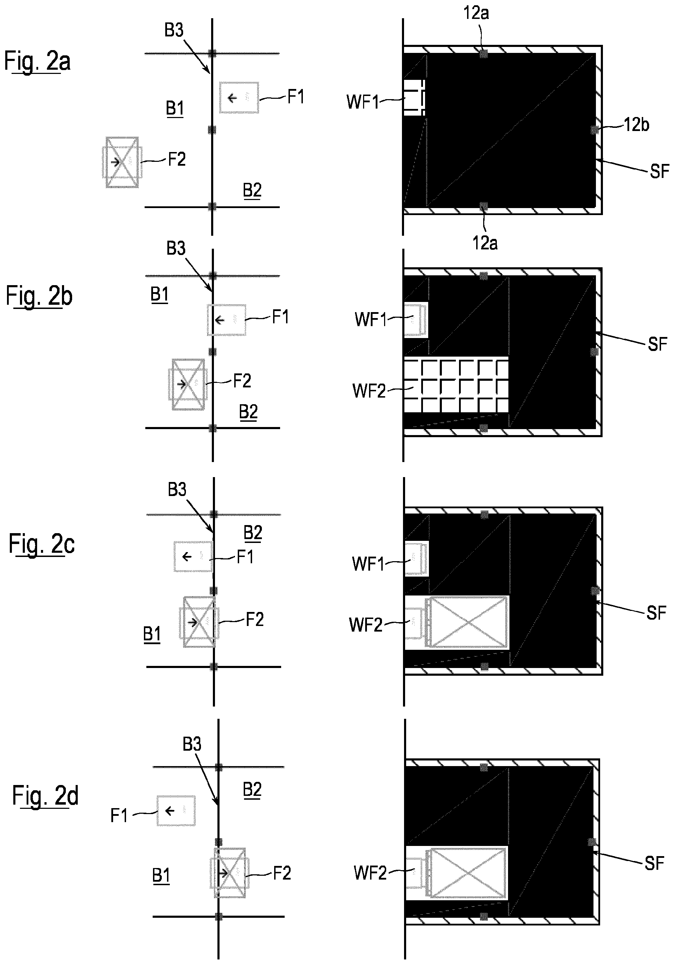

Die Figuren 2a bis 2d verdeutlichen nun einen derartigen Vorgang eines Durchfahrens des Systems 10 in einer sicheren Weise durch das Fahrzeug F1, wobei jeweils ferner ebenfalls ein zweites Fahrzeug F2 gezeigt ist, welches den Zugangsbereich B3 in umgekehrter Richtung mit einer leichten Verzögerung gegenüber dem ersten Fahrzeug F1 durchfährt und weiter unten noch näher erläutert werden wird. Hierzu meldet sich das Fahrzeug F1 in dem in Figur 2a und auch bereits Figur 1 gezeigten Zustand zunächst einmal bei der Steuereinheit 14 mittels einer Anfrage für ein Durchfahren des Zugangsbereichs B3 an.

Hierbei ist bereits in Figur 1 zu erkennen, dass in diesem Zustand durch die Überwachungseinrichtung der gesamte Zugangsbereich B3 durch das angesprochene erste Überwachungsfeld SF überdeckt wird und ferner zwei Unterbereiche durch die jeweiligen zweiten Überwachungsfelder WF1 und WF2 bedeckt sind. Alternativ könnten in dem ersten Überwachungsfeld SF die zweiten Überwachungsfelder WF1 und WF2 ausgespart sein und dort nur die zweiten Überwachungsfelder WF1 und WF2 wirken. In einer solchen Variante wird die erfindungsgemäße vollständige Überdeckung des Zugangsbereichs B3 durch das Zusammenwirken des ersten Überwachungsfelds SF mit den zweiten Überwachungsfeldern WF1 und WF2 erreicht. In diesem Zusammenhang sei auch bereits auf das Flussdiagramm aus Figur 3 verwiesen, mittels welchem die Abläufe während der Vorgänge aus den Figuren 2a bis 2d im Einzelnen verdeutlicht sein sollen.

Insbesondere entspricht die eben angesprochene Anfrage eines Durchfahrens des Zugangsbereichs B3 durch das Fahrzeug F1 in Figur 3 dem Schritt S1, wobei auf diese Anfrage hin durch die Steuereinheit 14 des Systems 10 zunächst einmal eine Vorlauf-Zeitnahme gestartet wird und eine Aktivierung sowie ggf. eine Anpassung des entsprechenden zweiten Überwachungsfelds WF1 auf Grundlage von durch das Fahrzeug F1 zusammen mit der Anfrage gelieferten Daten durchgeführt wird. Hierbei kann insbesondere die geometrische Form des entsprechenden Überwachungsfelds WF1 an die Ausmaße des Fahrzeugs F1 und der von ihm getragenen Last angepasst werden, wobei demzufolge unterschiedliche Fahrzeug- und Lasttypen zu unterschiedlichen Formen von zweiten Überwachungsfeldern WF1 und WF2 führen können. Dies lässt beispielsweise in den Figuren 2a bis 2d erkennen, in welchen die Fahrzeuge F1 und F2 beladen bzw. unbeladen sind und dementsprechend eine jeweilige Anpassung der zweiten Überwachungsfelder WF1 und WF2 auf die erwarteten Umrisse der Fahrzeuge F1 und F2 bzw. ihrer Lasten mit einem kleinen Überstand bzw. einer gewissen Toleranz erfolgt ist.

Wird während einer maximal zulässigen Vorlaufzeit keine erstmalige Verletzung des ersten Überwachungsfelds SF sowie des dem Fahrzeug F1 zugewiesenen zweiten Überwachungsfelds WF1 detektiert ("nein" in Schritt S2), so geht der Betriebsablauf unmittelbar von Schritt S2 dahin über, dass ein unsicheres Passieren des Zugangsbereichs bei Schritt S3 festgestellt wird, welches in einem nachfolgenden Schritt S4 zu einem Auslösen einer vorbestimmten Sicherheitsmaßnahme führt, beispielsweise einem Stilllegen von sämtlichen in dem Sicherheitsbereich B1 befindlichen Fahrzeugen und/oder Vorrichtungen. Alternativ wäre in diesem Fall auch denkbar, das System in seinen Ausgangszustand zurückzuversetzen und keinen Systemfehler im Sinne eines unsicheren Passierens auszulösen, da kein Eintritt in den Sicherheitsbereich erfolgt ist, sowie ggf. eine Meldung über einen Fehler an eine Bedienperson auszugeben, beispielsweise an einem Leitstand des Systems.

Wird dem hingegen innerhalb der maximal zulässigen Vorlaufzeit ein erstmaliges Verletzen des ersten Überwachungsfelds SF und des zugewiesenen zweiten Überwachungsfelds WF1 festgestellt ("ja" in Schritt S2), so geht das Verfahren zu Schritt S5 über. Dieses erstmalige Verletzen des Überwachungsfelds SF sowie des dem Fahrzeug zugewiesenen zweiten Überwachungsfelds WF1 ist hierbei in Figur 2b dargestellt, in welcher das Fahrzeug F1 momentan die entsprechenden Überwachungsfelder SF und WF1 verletzt.

Während des angesprochenen Schritts S5 wird ebenfalls durch die Steuereinheit 14 eine Zeitnahme durchgeführt und nach dem in Figur 2c dargestellten Abschluss des Durchfahrens der Überwachungsfelder SF und WF1 wird in Schritt S6 die für das Durchfahren der Überwachungsfelder SF und WF1 benötigte Zeit einerseits mit einer minimal zulässigen Zeitspanne und andererseits einer maximal zulässigen Zeitspanne verglichen. Stellt sich hierbei heraus, dass die für das Durchfahren der Überwachungsfelder SF und WF1 benötigte Zeit nicht zwischen der minimal zulässigen Zeitspanne und der maximal zulässigen Zeitspanne liegt ("nein" in Schritt S6), so wird erneut ein unsicheres Passieren des Zugangsbereichs B3 ermittelt und das Verfahren geht zum Schritt S3 sowie nachfolgend zum Schritt S4 in der oben beschriebenen Weise über. Hierbei versteht sich, dass auch bereits bei einem Ablauf der maximal zulässigen Zeitspanne direkt zu Schritt S3 übergegangen werden kann und nicht erst die Beendigung des Verletzens der Überwachungsfelder SF und WF1 abgewartet werden muss, bevor eine entsprechende Auswertung der entsprechenden Zeitspanne erfolgt.

Liegt dem hingegen die für das Durchfahren des Überwachungsbereichs B3 benötigte Zeit zwischen der minimal zulässigen Zeitspanne und der maximal zulässigen Zeitspanne ("ja" in Schritt S6), so geht das Verfahren zu Schritt S7 über, entsprechend der Darstellung in Figur 2d, in welcher das Fahrzeug nunmehr in dem Sicherheitsbereich B1 befindlich ist und die Überwachungsfelder SF und WF1 nicht mehr verletzt sind. Zu diesem Zeitpunkt wird ein sicheres Durchfahren des Zugangsbereichs B3 durch das Fahrzeug F1 festgestellt und die in Schritt S1 erhaltene Anfrage nach einem Passieren zurückgesetzt bzw. gelöscht, sodass der Prozess erneut zu Schritt S1 übergehen kann, sobald ein weiteres Fahrzeug ein Durchfahren des Zugangsbereichs B3 in gleicher Weise anfragt. Das zweite Überwachungsfeld WF1 wird in diesem Zusammenhang zurückgesetzt und ein Verletzen des ersten Überwachungsfelds SF im Durchfahrbereich von Fahrzeug F1 würde in der Folge zu der Feststellung eines unsicheren Passierens und damit zu einer Fehlerausgabe führen.

Abschließend sei noch darauf hingewiesen, dass auch bei einem Herausfahren aus dem Sicherheitsbereich B1 in den allgemein zugänglichen Bereich B2 ein ähnliches Verfahren durchgeführt werden kann, wie durch das sich in entgegengesetzter Richtung zu dem ersten Fahrzeug F1 bewegende Fahrzeug F2 angedeutet ist, welches sämtliche der beschriebenen Schritte zeitverzögert verglichen mit dem ersten Fahrzeug F1 und in entgegengesetzter Richtung durchführt, wodurch es den Zugangsbereich B3 auf seiner Bahn später erreicht. Ein solches Vorgehen bei einem Verlassen des Sicherheitsbereichs B1 ist ebenfalls notwendig, da durch die Überwachung des Überwachungsbereichs B3 in der hier beschriebenen Weise nicht ermittelt werden kann, in welche Richtung sich ein Fahrzeug F1 bzw. F2 durch den Überwachungsbereich B3 hindurchbewegt bzw. von welcher Seite her eine Verletzung der Überwachungsfelder erfolgt. Hierbei sei darauf hingewiesen, dass die Dimensionen der Überwachungsfelder WF1 und WF2 an die Dimensionen der durchfahrenden Fahrzeuge F1 (ohne Last) und F2 (mit Last) angepasst sind. Die entsprechende Information, ob ein Fahrzeug eine Last transportiert oder nicht, bzw. die Dimensionen des Fahrzeugs und/oder der Last können bei dem Fahrzeug selbst oder in einem Leitsystem hinterlegt sein und an das System 10 zur Erstellung der Dimensionen der Überwachungsbereiche kommuniziert werden.

Weiterhin sei darauf hingewiesen, dass in Figur 3 ferner ein unabhängiger Schritt S8 dargestellt ist, welcher symbolisieren soll, dass in jedem anderen Fall einer Verletzung des ersten Überwachungsfelds SF ein unsicheres Passieren des Zugangsbereichs B3 festgestellt wird und demzufolge die Verfahrensschritte S3 und S4 ausgelöst werden. Beispiele hierfür sind insbesondere Verletzungen des ersten Überwachungsfelds SF ohne eine vorhergehende Anfrage nach einem Durchfahren des Zugangsbereichs durch ein entsprechendes Fahrzeug, welche in jedem Fall als unzulässig zu kategorisieren sind.

## Patentansprüche

1. System (10) zur Kontrolle eines Zugangs zu einem Sicherheitsbereich (B1) in einer Betriebsumgebung, insbesondere einer Logistikeinrichtung, umfassend:
- einen Zugangsbereich (B3), welcher den Sicherheitsbereich (B1) von einem frei zugänglichen Bereich (B2) der Betriebsumgebung trennt;
- eine Überwachungseinrichtung (12), welche wenigstens zwei einander bezüglich des Zugangsbereichs gegenüberliegende Sensoreinheiten (12a) umfasst und dazu eingerichtet ist, in dem Zugangsbereich (B3) wenigstens zwei Überwachungsfelder (SF, WF1, WF2) aufzuspannen; wobei ein erstes der Überwachungsfelder (SF) den gesamten Zugangsbereich (B3) überdeckt und wenigstens ein zweites der Überwachungsfelder (WF1, WF2) einen Unterbereich des Zugangsbereichs (B3) überdeckt, oder
das wenigstens eine zweite Überwachungsfeld (WF1, WF2) einen Unterbereich des Zugangsbereichs (B3) überdeckt und das erste Überwachungsfeld (SF) und das wenigstens eine zweite Überwachungsfeld (WF1, WF2) gemeinschaftlich den gesamten Zugangsbereich (B3) überdecken; und
- eine Steuereinheit (14), welche mit der Überwachungseinrichtung (12) betriebsmäßig gekoppelt und ferner zu einer Kommunikation mit sich in der Betriebsumgebung fortbewegenden Fahrzeugen (F1, F2) eingerichtet ist,
wobei die Steuereinheit (14) ferner dazu eingerichtet ist, bei einem Feststellen einer Verletzung des entsprechenden zweiten Überwachungsfelds (WF1, WF2) nach einem Anfragen eines Durchfahrens des Zugangsbereichs (B3) durch ein Fahrzeug (F1, F2) eine maximal zulässige Zeitspanne zu überwachen, innerhalb welcher ein sicheres Durchfahren des Zugangsbereichs (B3) möglich ist.

2. System nach Anspruch 1,
wobei die Steuereinheit (14) ferner dazu eingerichtet ist, eine minimal zulässige Zeitspanne zu überwachen, welche nach einem Anfragen eines Durchfahrens des Zugangsbereichs (B3) durch ein Fahrzeug (F1, F2) für ein sicheres Durchfahren des Zugangsbereichs (B3) nicht unterschritten werden darf.

3. System (10) nach Anspruch 1 oder 2,
wobei die wenigstens zwei Sensoreinheiten (12a) als 2D-LIDAR-Sensoreinheiten ausgeführt sind.

4. System (10) nach einem der vorhergehenden Ansprüche,
wobei die Überwachungseinrichtung (12) ferner eine dritte Sensoreinheit (12b) umfasst, welche in einem zentralen oberen Bereich des Zugangsbereichs (B3) angeordnet ist.

5. System (10) nach einem der vorhergehenden Ansprüche,
wobei die Überwachungseinrichtung (12) dazu eingerichtet ist, wenigstens zwei zweite Überwachungsfelder (WF1, WF2) in jeweiligen Unterbereichen des Zugangsbereichs (B3) aufzuspannen.

6. System (10) nach einem der vorhergehenden Ansprüche,
wobei das erste Überwachungsfeld (SF) und das wenigstens eine zweite Überwachungsfeld (WF1, WF2) unterschiedliche Sicherheitsstufen aufweisen, wobei insbesondere das erste Überwachungsfeld (SF) als ein Sicherheitsfeld bzw. Schutzfeld ausgeführt ist und/oder das wenigstens eine zweite Überwachungsfeld (WF1, WF2) als ein Warnfeld ausgeführt ist.

7. System nach einem der Ansprüche 1 bis 5,
wobei sämtliche der Überwachungsfelder (SF, WF1, WF2) jeweils als Sicherheitsfelder bzw. Schutzfelder ausgeführt sind.

8. System nach einem der Ansprüche 1 bis 7,
wobei die Steuereinheit (14) ferner dazu eingerichtet ist, bei einem Bestimmen eines unsicheren Passierens des Zugangsbereichs (B3), ein Auslösen wenigstens einer vorbestimmten Sicherheitsmaßnahme anzuweisen, insbesondere eines Stilllegens von in dem Sicherheitsbereich (B1) befindlichen Fahrzeugen und/oder Vorrichtungen.

9. Logistikeinrichtung, umfassend einen Sicherheitsbereich (B1) und einen frei zugänglichen Bereich (B2), wobei zwischen dem frei zugänglichen Bereich (B2) und dem Sicherheitsbereich (B1) ein System (10) nach einem der vorhergehenden Ansprüche vorgesehen ist.

10. Verfahren zum Betreiben eines Systems (10) nach einem der Ansprüche 1 bis 8, unter dauerhafter Überwachung wenigstens des ersten Überwachungsfelds (SF) und ggf. des wenigstens einen zweiten Überwachungsfelds (WF1, WF2) durch die Überwachungseinrichtung (14) umfassend die Schritte:
- Anfragen eines Durchfahrens des Zugangsbereichs (B3) an die Steuereinheit (14) durch ein sich in der Betriebsumgebung bewegendes Fahrzeug (F1, F2);
- bei Feststellen einer Verletzung des oder eines der zweiten Überwachungsfelder (WF1, WF2) und ggf. des ersten Überwachungsfelds (SF), Starten einer Zeitnahme durch die Steuereinheit (14);
- lediglich bei Feststellen einer Verletzung des entsprechenden zweiten Überwachungsfelds (WF1, WF2) für eine Zeitspanne, welche unterhalb einer vorbestimmten maximal zulässigen Zeitspanne liegt, Bestimmen eines sicheren Durchfahrens des Zugangsbereichs (B3); und
- bei allen anderen festgestellten Verletzungen des ersten und ggf. zweiten Überwachungsfelds (SF, WF1, WF2), Bestimmen eines unsicheren Passierens des Zugangsbereichs (B3).

11. Verfahren nach Anspruch 10,
wobei lediglich bei einer Verletzung des entsprechenden zweiten Überwachungsfelds (WF1, WF2) für eine Zeitspanne, welche zwischen einer vorbestimmten minimal zulässigen Zeitspanne und der vorbestimmten maximal zulässigen Zeitspanne liegt, ein sicheres Durchfahren des Zugangsbereichs (B3) bestimmt wird.

12. Verfahren nach Anspruch 10 oder 11,
ferner umfassend ein Zurücksetzen des Betriebs des Systems (10), sobald nach einem angefragten Durchfahren der Überwachungsfelder (SF, WF1, WF2) ein Ende des Verletzens davon erfasst wird.

13. Verfahren nach einem der Ansprüche 10 bis 12,
ferner umfassend nach dem Anfragen eines Durchfahrens des Zugangsbereichs (B3) durch ein Fahrzeug (F1, F2), Auslösen einer Vorlauf-Zeitnahme durch die Steuereinheit (14),
wobei bei einem Ablauf einer vorbestimmten maximal zulässigen Vorlaufzeit vor einer erstmaligen Verletzung des ersten Überwachungsfelds (SF) ein unsicheres Durchfahren des Zugangsbereichs (B3) bestimmt wird.

14. Verfahren nach einem der Ansprüche 10 bis 13,
ferner umfassend ein Anpassen zumindest des zweiten Überwachungsfelds (WF1, WF2) auf Grundlage von für das Fahrzeug (F1, F2) zusammen mit der Anfrage nach einem Durchfahren des Zugangsbereichs (B3) gelieferten Fahrzeugdaten, insbesondere der Dimensionen des Fahrzeugs und/oder der Last; und/oder
ferner umfassend ein Anpassen der vorbestimmten minimal zulässigen Zeitspanne und/oder der vorbestimmten maximal zulässigen Zeitspanne auf Grundlage von durch das Fahrzeug (F1, F2) zusammen mit der Anfrage nach einem Durchfahren des Zugangsbereichs (B3) gelieferten Fahrzeugdaten.

15. Verfahren nach einem der Ansprüche 10 bis 14,
ferner umfassend bei einem Bestimmen eines unsicheren Passierens des Zugangsbereichs (B3), ein Auslösen wenigstens einer vorbestimmten Sicherheitsmaßnahme, insbesondere eines Stilllegens von in dem Sicherheitsbereich (B1) befindlichen Fahrzeugen und/oder Vorrichtungen.
